# EUROPEAN PATENT APPLICATION

(11) **EP 2 464 135 A1**
(43) Date of publication of application: **13.06.2012**
(21) Application number: 11181934.8
(22) Date of filing: 20.09.2011
(51) Int. Cl.: H04N 21/422

(54) **Electronic equipment providing electronic manual and control method thereof**

(30) Priority: 13.12.2010 KR 20100126958
(71) Applicant: Samsung Electronics Co., Ltd., Suwon-si Gyeonggi-do 442-742 (KR)
(72) Inventor: Kim, Moon-soo, Gyeonggi-do (KR)
(74) Representative: Davies, Robert Ean

(57) **Abstract**

An electronic equipment providing an electronic manual and a control method of the electronic equipment are provided. The electronic equipment includes an image processor, a remote control signal receiver, and a controller. The image processor processes an image of an electronic manual. The remote control signal receiver receives a remote control signal from a remote control including information about a shortcut key of the remote control. The controller determines whether an electronic manual mode is running when the remote control signal corresponding to the shortcut key is received, and when it is determined that the electronic manual mode is running, controls the image processor to display an image of the electronic manual corresponding to a function of the shortcut key.

## Description

### BACKGROUND

### 1. Field

Apparatuses and methods consistent with the exemplary embodiments relate to electronic equipment providing an electronic manual and a control method thereof, and more particularly, to electronic equipment that provide an image of an electronic manual using a shortcut key of a remote control, and a control method thereof.

### 2. Description of the Related Art

Various types of electronic equipment, such as a television (TV), a set-top box (STB), a digital video disk (DVD) player, or the like, provide electronic manuals for the convenience of users. In related art electronic equipment, users browse through an electronic manual in full to search for a particular function, for example, using an up/down key of a remote control, until a corresponding image is displayed.

The remote control includes shortcut keys with respect to major functions of the electronic equipment, which are frequently used by users. To view an image corresponding to a shortcut key of the remote control while the electronic manual is running, users browse through all images using an up/down key of the remote control, causing inconvenience.

### SUMMARY

One or more exemplary embodiments provide electronic equipment providing an electronic manual which displays an image of the electronic manual corresponding to a function when a shortcut key of a remote control is pressed, and a control method thereof.

One or more exemplary embodiments also provide electronic equipment providing an electronic manual to find an image of an electronic manual of a desired function, and a control method thereof.

According to an aspect of an exemplary embodiment, there is provided an electronic equipment providing an electronic manual, the electronic equipment including: an image processor which processes an image of an electronic manual; a remote control signal receiver which receives a remote control signal from a remote control including information about a shortcut key of the remote control; and a controller which determines whether an electronic manual mode is running when the remote control signal corresponding to the shortcut key is received, and when it is determined that the electronic manual mode is running, controls the image processor to display an image of the electronic manual corresponding to a function of the shortcut key.

The controller may determine that the electronic manual mode is running when the electronic manual is running.

The controller may also determine that the electronic manual mode is running when a menu of an on-screen display (OSD) is being displayed.

The electronic equipment may further include a storage unit which stores indexed information comprising information about one or more shortcut keys and, for each shortcut key, a corresponding image of the electronic manual for the function of the shortcut key, wherein the controller searches for the electronic manual with reference to the indexed information.

When the remote control signal receiver further receives a remote control signal that comprises information about at least one navigation key of the remote control, the controller may control the image processor to change the image of the electronic manual based on the information about the navigation key when the remote control signal including the information about the at least one navigation key is received.

The electronic manual may include a plurality of pages, and when the remote control signal receiver further receives a remote control signal that includes information about one or more number keys of the remote control, the controller may control the image processor to display an image of a page of the electronic manual corresponding to the one or more number keys when the remote control signal including the information about the one or more number keys is received.

When the remote control signal receiver receives a remote control signal including a shortcut key setting instruction to set a function for an undesignated shortcut key, the controller may allocate a function among a plurality of functions to the undesignated shortcut key based on the shortcut key setting instruction.

According to an aspect of another exemplary embodiment, there is provided a control method for controlling electronic equipment to provide an electronic manual, the control method including: receiving a remote control signal from a remote control including information about a shortcut key of the remote control; determining whether an electronic manual mode is running; and when it is determined that the electronic manual mode is running, displaying an image of the electronic manual corresponding to a function of the shortcut key.

The determining may include determining that the electronic manual mode is running when the electronic manual is running.

The determining may include determining that the electronic manual mode is running when a menu of an on-screen display (OSD) is being displayed.

The control method may further include searching for the image of the electronic manual with reference to pre-stored indexed information including information about one or more shortcut keys and, for each shortcut key, a corresponding image of the electronic manual for the function of the shortcut key.

The control method may further include receiving a remote control signal that comprises information about at least one navigation key of the remote control; and changing the image of the electronic image based on information about the at least one navigation key when the remote control signal including the information about the at least one navigation key is received.

The electronic manual may include a plurality of pages, and the control method may further include receiving a remote control signal that includes information about one or more number keys of the remote control; and displaying an image of a page of the electronic manual corresponding to the one or more number keys when the remote control signal including the information about the one or more number keys is received.

The control method may further include receiving a remote control signal including a shortcut key setting instruction to set a function for an undesignated shortcut key; and allocating a function among a plurality of functions of the electronic equipment to the undesignated shortcut key based on the shortcut key setting instruction.

According to an aspect of another exemplary embodiment, there is provided an electronic apparatus providing an electronic manual arranged in a plurality of pages, each page including information on one of a plurality of functions of the electronic apparatus, the electronic apparatus including an image processor which processes a page of the electronic manual; a remote control signal receiver which receives a control signal from a remote control device associated with the electronic apparatus, the control signal specifying one or more keys pressed on the remote control device; and a controller which determines whether the electronic apparatus is in an electronic manual mode or a normal mode, controls the electronic apparatus to perform a function of the electronic apparatus that is previously associated with the one or more keys specified in the control signal, if it is determined that the electronic apparatus is in the normal mode at a time at which the control signal is received, and controls the image processor to display a page of the electronic manual that corresponds to the function of the electronic apparatus that is previously associated with the one or more keys specified in the control signal, if the electronic apparatus is determined to be in the electronic manual mode at the time at which the control signal is received.

The controller may determine the electronic apparatus is in the electronic manual mode when the electronic manual mode is running or when the image processor is processing an image of a menu of an on-screen display.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a block diagram of electronic equipment providing an electronic manual according to an exemplary embodiment;
FIG. 2 is a block diagram of electronic equipment providing an electronic manual according to another exemplary embodiment;
FIG. 3 is a flowchart illustrating a process of electronic equipment providing an electronic manual according to an exemplary embodiment;
FIG. 4 illustrates an example of a remote control according to an exemplary embodiment; and
FIG. 5 illustrates an example of converting a screen of an electronic manual according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity and conciseness, and like reference numerals refer to like elements throughout.

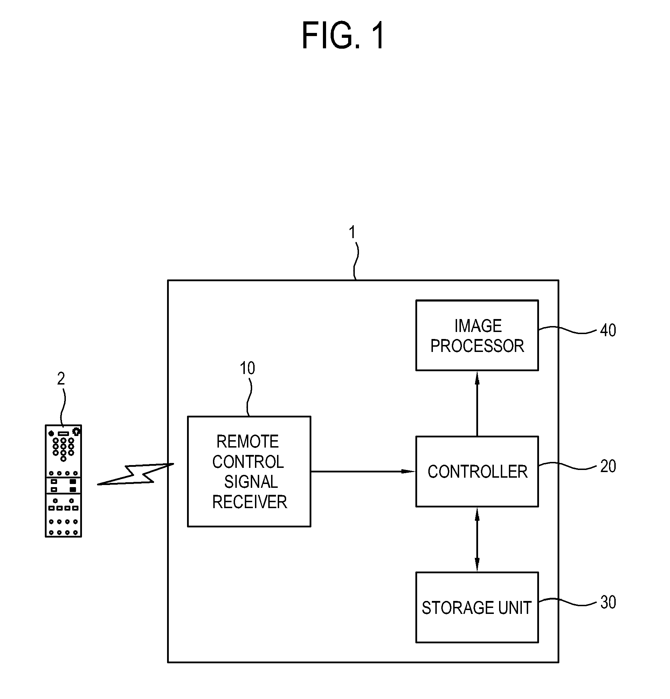

FIG. 1 is a block diagram illustrating a configuration of electronic equipment providing an electronic manual according to an exemplary embodiment. Referring to FIG. 1, an electronic equipment 1 includes a remote control signal receiver 10, a controller 20, and an image processor 40. The electronic equipment may also include at least one central processing unit (CPU) for implementing the remote control signal receiver 10, the controller 20, and/or the image processor 40. The electronic equipment 1 may further include a storage unit 30. The electronic equipment of FIG. 1 may be configured as a video cassette recorder (VCR), a DVD player, a Blu-ray disk (BD) player, or the like. However, the electronic equipment 1 according to the exemplary embodiment is not limited to the configuration shown in FIG. 1.

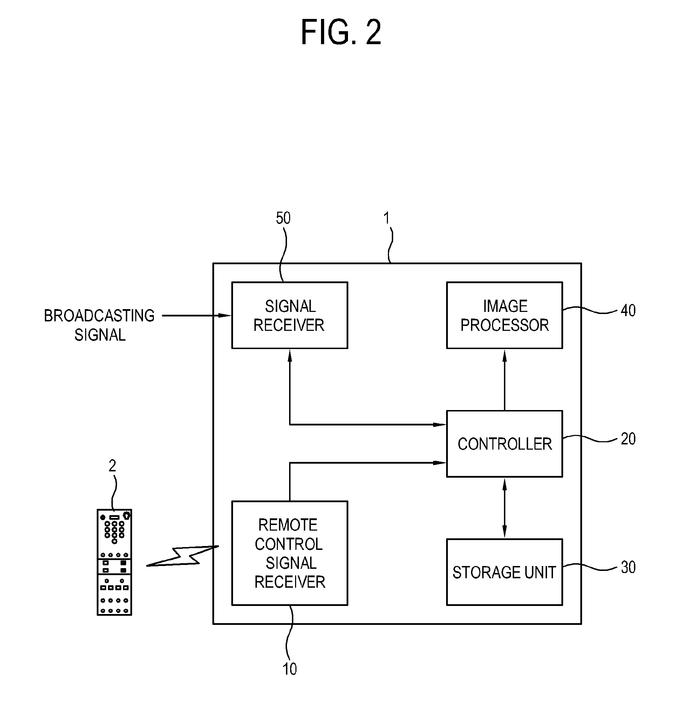

FIG. 2 is a block diagram illustrating a configuration of electronic equipment according to another exemplary embodiment. The electronic equipment 1 of FIG. 2 further includes a signal receiver 50 in addition to the configuration of the electronic equipment 1 of FIG. 1. The electronic equipment 1 of FIG. 2 may be configured as a TV or a set-top box. For convenience of illustration, FIG. 2 does not show a display unit displaying images, but the electronic equipment 1 according to the exemplary embodiments may further include a display unit. The electronic equipment 1 may also include other units for carrying out various additional functionality of the equipment. Hereinafter, unless specified otherwise, like reference numerals refer to like elements throughout the description of the electronic equipment 1 with reference to FIGS. 1 and 2.

FIGS. 1 and 2 show a remote control 2. The remote control 2 receives an instruction from a user and transmits a remote control signal including the input instruction to the electronic equipment 1. The electronic equipment 1 receives the remote control signal from the remote control 2 and operates based on the instruction included in the remote control signal.

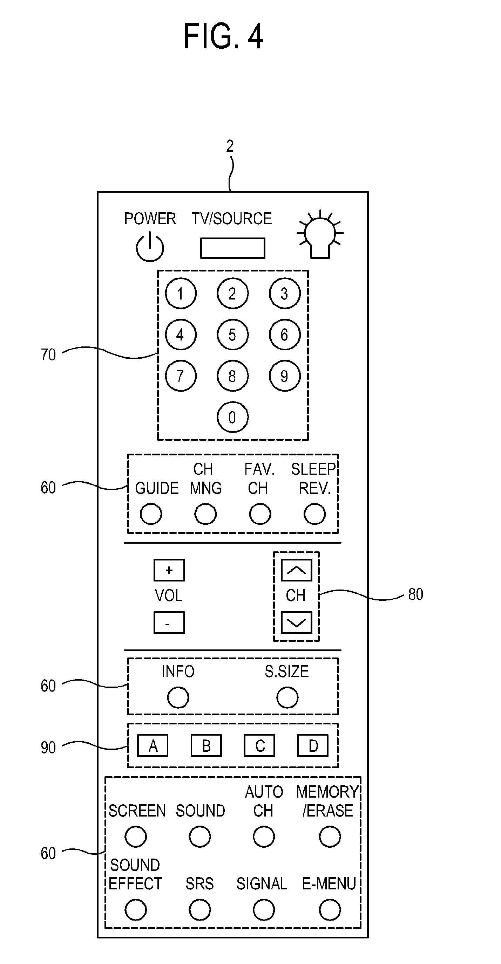

FIG. 4 illustrates an appearance of a remote control 2 according to an exemplary embodiment. As shown in FIG. 4, the remote control 2 includes shortcut keys 60, number keys 70, navigation keys 80, and undesignated shortcut keys 90. Although not shown, the remote control 2 may further include a controller and a remote control signal output unit, wherein the controller determines a key value corresponding to a shortcut key 60 when the shortcut key 60 is pressed, and the remote control signal output unit generates and outputs a remote control signal corresponding to the key value determined by the controller to the electronic equipment 1. The electronic equipment 1 may provide a plurality of functions. Functions frequently used may be designated as shortcut keys 60 among the plurality of functions of the electronic equipment 1. For example, the functions designated as the shortcut keys 60 shown in the example of FIG. 4 include screen setting, sound setting, favorites, channel management, or the like. Except for the functions as the shortcut keys 60, desired functions of the electronic equipment 1 may be additionally set up and assigned to the undesignated shortcut keys 90. For example, program reservation, game mode, auto-diagnosis, sub-screen setting, etc. may be set up.

Further, the functions set up in the undesignated shortcut keys 90 may be changed to different functions. After the functions are set up in the undesignated shortcut keys 90, the undesignated shortcut keys 90 serve to control so that the electronic equipment 1 performs the corresponding functions as the shortcut keys 60.

The electronic equipment 1 provides an electronic manual. The electronic manual according to the exemplary embodiments includes descriptions on the plurality of functions performed by the electronic equipment 1 and may, for example, provide information including specifications of the functions, user guides, or the like, in image and/or audio formats.

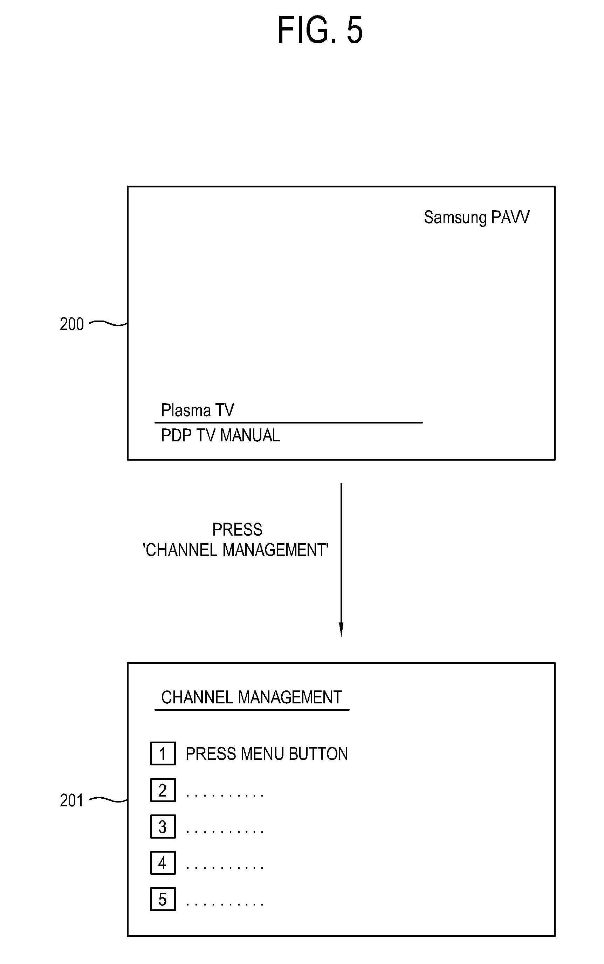

FIG. 5 illustrates an example of the electronic manual 200 according to the present embodiment. As shown in FIG. 5, the electronic equipment 1 displays the electronic manual as an image 200 on a screen of a display unit. In a case in which the electronic equipment 1 does not include a display unit, the electronic equipment 1 processes the image 200 of the electronic manual and outputs the processed image 200 of the electronic manual to a display unit (not shown).

The image 200 of the electronic manual may be displayed by an instruction input using the remote control 2. The electronic manual may be stored and installed as an execution program in the storage unit 30 of the electronic equipment 1. When the electronic manual is selected using the remote control 2, the electronic equipment 1 implements the program of the electronic manual installed in the storage unit 30 and displays the image 200 of the electronic manual.

The storage unit 30 of the electronic equipment 1 may further store indexed information formed of information about shortcut key signals matching images of the electronic manual with respect to the functions corresponding to the shortcut keys 60 to search for content of the electronic manual.

For example, the storage unit 30 stores indexed information about functions, such as screen mode, sound mode, and memory/erase. In the present embodiment, the indexed information may be stored in a database and may be used to search for information about the electronic manual with respect to a particular function of the electronic equipment 1 using a sequential or binary search. The electronic manual may be formed of information about the plurality of functions arranged in pages. The storage unit 30 stores indexed information about a plurality of pages of the electronic manual in a B tree or a binary tree, and the indexed information enables quick searching for a desired page using the number keys 70 or the navigation keys 80.

In a predetermined condition (hereinafter, referred to as an "electronic manual mode"), the electronic equipment 1 of the present embodiment displays an image of the electronic manual corresponding to a particular function among the plurality of functions of the electronic equipment 1. For example, when a shortcut key 60 of the remote control 2 is pressed while the electronic manual is performed, the electronic equipment 1 may immediately display an image of the electronic manual corresponding to a function of the shortcut key 60. Alternatively, when a shortcut key 60 of the remote control 2 is pressed while a menu on-screen display (OSD) or user interface (UI) with respect to the electronic manual is activated, the electronic equipment 1 may immediately display an image of the electronic manual corresponding to a function of the shortcut key 60.

In detail, when a shortcut key 60 of the remote control 2 is pressed, the remote control 2 transmits a remote control signal corresponding to the shortcut key 60 to the electronic equipment 1. The remote control signal receiver 10 receives the remote control signal from the remote control 2 and converts the signal into a type of information to be processed by the controller 20 and transmits the information to the controller 20. The controller 20 controls the image processor 40 to display an image 200 of the electronic manual corresponding to the shortcut key 60 when the information is received from the remote control signal receiver 10. The image processor 40 performs image processing to display the image 200 of the electronic manual corresponding to the shortcut key 60 by control of the controller 20. The image 200 of the electronic manual may be displayed on the screen when a shortcut key, for example, an "e-menu" key, is pressed among the shortcut keys 60 of the remote control 2, shown in FIG. 4. When a signal is received from the remote control signal receiver 10, the controller 20 determines whether the electronic manual mode is running. The electronic manual mode includes not only a case where the electronic manual is running but an advance preparation process for running the electronic manual where, for example, a menu OSD or UI, is displayed although the electronic manual is not running. That is, when a shortcut key 60 is pressed with the menu OSD being displayed on the screen, an image of the electronic manual corresponding to the shortcut key 60 may be displayed. Further, when a shortcut key 60 is pressed with the menu OSD being displayed on the screen, the controller 20 may determine whether to perform a corresponding function or to display an image 200 of the electronic manual corresponding to the function via a user identification process.

The controller 20 determines whether the electronic manual mode is running. When the electronic manual mode is not running, the controller 20 performs control to implement original functions of the shortcut keys 60. For example, when a remote control signal of a shortcut key 60 corresponding to "screen size" is received, a menu to adjust a size of the screen is displayed, so that the size of the screen may be adjusted using the remote control 2.

However, in the electronic manual mode, the controller 20 searches for an image of the electronic manual corresponding to a function of a shortcut key 60 pressed using the indexed information in the database of the storage unit 30.

The electronic manual may be automatically run when the electronic equipment 1 is turned on, or the electronic manual may be run by pressing an e-menu button on the remote control 2. The electronic manual may be formed of a plurality of pages, wherein one page may include specifications of a function of the electronic equipment 1 in text format, or may include a plurality of functions in hyperlinks.

After the image of the electronic manual is being displayed and a remote control signal corresponding to the navigation keys 80 of the remote control 2 is subsequently received, the controller 20 controls the image processor 40 to display a previous or subsequent image to an image of the electronic manual currently displayed.

A desired function may be set for the undesignated shortcut keys 90 of the remote control 2. The set undesignated shortcut key 90 operates in the electronic manual mode in the same manner as the shortcut keys 60. That is, when the function of the shortcut key is set, indexed information formed of information about a shortcut key signal matching an image of the electronic manual with respect to the function corresponding to the shortcut key is stored in the indexed information of the storage unit 30. Then, in the electronic manual mode, an image corresponding to the shortcut key signal is displayed. In other words, when a function is assigned to an undesignated shortcut key 90, electronic manual information corresponding to the assigned function is indexed to the assigned undesignated shortcut key 90. Then, in electronic mode, when the assigned undesignated shortcut key 90 is pressed, the electronic manual information corresponding to the assigned function is located and displayed.

The signal receiver 50 receives broadcasting signals of a plurality of channels.

When the broadcasting signals are received, the controller 20 controls the signal receiver 50 to receive a broadcasting signal of a selected channel through input of the number keys 70 of the remote control 2. Further, when the number keys 70 are pressed in electronic manual mode, the controller 20 controls the image processor 40 to display an image of the electronic manual page corresponding to the number keys 70. For example, when '50' is input, the controller 20 searches for the indexed information in the storage unit 30 and controls the image processor 40 to display page 50 of the electronic manual, and the image processor 40 processes and transmits the image of the electronic manual to the display unit (not shown).

The remote control signal receiver 10 receives a shortcut key setting instruction from the remote control 2 to set a shortcut key using the undesignated shortcut keys 90 of the remote control 2. When the shortcut key setting instruction is received, the controller 20 allocates one of the plurality of functions of the electronic equipment 1 to the shortcut key.

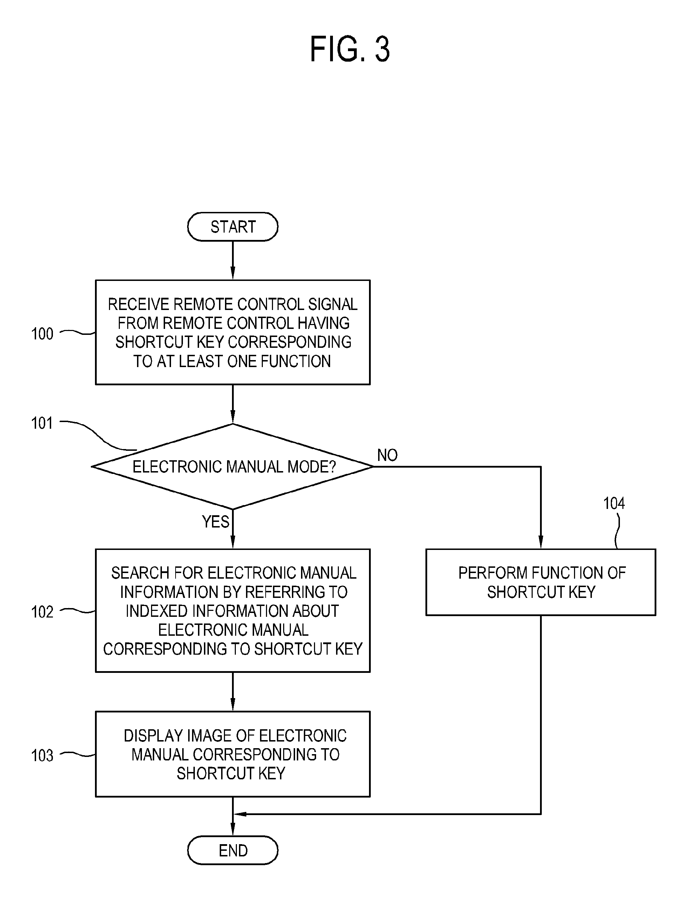

FIG. 3 is a flowchart illustrating a process of electronic equipment providing an electronic manual according to an exemplary embodiment.

Referring to FIG. 3, a remote control signal is received from the remote control 2 including a shortcut key corresponding to at least one function in operation 100.

It is determined whether the electronic manual mode is running in operation 101, wherein the electronic manual mode includes not only a case where the electronic manual is running but an advance preparation process for running the electronic manual where, for example, a menu OSD, is displayed although the electronic manual is not running.

When the electronic manual mode is not running (NO in operation 101), a function of a shortcut key is performed to control the electronic equipment in operation 104.

If it is determined that the electronic manual mode is engaged (YES in operation 101), an electronic manual or electronic manual page that corresponds to a function of the received shortcut key is searched for in operation 102 by referring to indexed information formed of information about a shortcut key signal matching an image of the electronic manual with respect to the function corresponding to the shortcut key.

The found image of the electronic manual corresponding to the indexed information is displayed in operation 103. Here, when the electronic manual is running, the image corresponding to the indexed information is displayed. In an advance preparation process for running the electronic manual, the electronic manual starts running when the image corresponding to the indexed information is displayed.

FIG. 4 illustrates an example of the remote control according to the exemplary embodiment.

Referring to FIG. 4, the remote control 2 includes the shortcut keys 60, the number keys 70, the navigation keys 80, and undesignated shortcut keys 90.

The shortcut keys 60 are allocated to various functions frequently used in electronic equipment to control the functions of the electronic equipment generally, or to view images of an electronic manual corresponding to the functions of the shortcut keys 60 in electronic manual mode.

The number keys 70 are used to change channels of broadcasting signals when the electronic equipment, such as a TV or a set-top box, receives broadcasting signals. Further, in the electronic manual mode, the number keys 70 are used to view desired images of pages of the electronic manual.

The navigation keys 80 are used to change to previous or subsequent channels when broadcasting signals are received. In the electronic manual mode, the navigation keys 80 are used to view previous or subsequent images to an image currently displayed.

The undesignated shortcut keys 90 are spare shortcut keys that may be used to set a shortcut key to a desired function. The desired functions are allocated to the undesignated shortcut keys 90 to control the functions of the electronic equipment generally, or to view images of the electronic manual corresponding to the functions in the electronic manual mode.

FIG. 5 illustrates an example of converting the screen of the electronic manual according to an exemplary embodiment.

When a shortcut key, "channel management," among the shortcut keys 60 of the remote control 2 is pressed, the electronic equipment 1 determines whether the electronic manual mode is running. When the electronic manual mode is running, the electronic equipment 1 displays an image 201 of the electronic manual corresponding to "channel management."

According to the exemplary embodiments, when the electronic manual is running, an image of an electronic manual corresponding to a shortcut key is displayed using a shortcut function on a remote control, so that the image of the electronic manual corresponding to the shortcut key may quickly and conveniently be viewed without using an up/down key of the remote control.

Although a few exemplary embodiments have been shown and described, it will be appreciated by those skilled in the art that changes may be made in these exemplary embodiments without departing from the principles and spirit of the present inventive concept, the scope of which is defined in the appended claims and their equivalents. For example, the above exemplary embodiments are described with a TV as an illustrative example, but the display apparatus of the exemplary embodiments may be configured as a smart phone, a mobile phone, and the like.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. Electronic equipment providing an electronic manual, the electronic equipment comprising:
an image processor which processes an image of an electronic manual;
a remote control signal receiver which receives a remote control signal from a remote control including information about a shortcut key of the remote control; and
a controller which determines whether an electronic manual mode is running when the remote control signal corresponding to the shortcut key is received, and when it is determined that the electronic manual mode is running, controls the image processor to display an image of the electronic manual corresponding to a function of the shortcut key.

2. The electronic equipment of claim 1, wherein the controller determines that the electronic manual mode is running when the electronic manual is running.

3. The electronic equipment of claim 1, wherein the controller determines that the electronic manual mode is running when a menu of an on-screen display is being displayed.

4. The electronic equipment of claim 1, further comprising:
a storage unit which stores indexed information comprising information about one or more shortcut keys and, for each shortcut key, a corresponding image of the electronic manual for the function of the shortcut key,
wherein the controller searches for the electronic manual with reference to the indexed information.

5. The electronic equipment of claim 1, wherein when the remote control signal receiver further receives a remote control signal that comprises information about at least one navigation key of the remote control, and the controller controls the image processor to change the image of the electronic manual based on the information about the navigation key when the remote control signal including the information about the at least one navigation key is received.

6. The electronic equipment of claim 1, wherein the electronic manual comprises a plurality of pages, and
when the remote control signal receiver further receives a remote control signal that comprises information about one or more number keys of the remote control, the controller controls the image processor to display an image of a page of the electronic manual corresponding to the one or more number keys when the remote control signal including the information about the one or more number keys is received.

7. The electronic equipment of claim 1, wherein when the remote control signal receiver receives a remote control signal comprising a shortcut key setting instruction to set a function for an undesignated shortcut key, and the controller allocates a function among a plurality of functions to the undesignated shortcut key based on the shortcut key setting instruction.

8. A control method for controlling electronic equipment to provide an electronic manual, the control method comprising:
receiving a remote control signal from a remote control including information about a shortcut key of the remote control;
determining whether an electronic manual mode is running; and
when it is determined that the electronic manual mode is running, displaying an image of the electronic manual corresponding to a function of the shortcut key.

9. The control method of claim 8, wherein the electronic manual mode is determined to be running when the electronic manual is running.

10. The control method of claim 8, wherein the electronic manual mode is determined to be running when a menu of an on-screen display is being displayed.

11. The control method of claim 8, further comprising searching for the image of the electronic manual with reference to pre-stored indexed information comprising information about one or more shortcut keys and, for each shortcut key, a corresponding image of the electronic manual for the function of the shortcut key.

12. The control method of claim 8, further comprising receiving a remote control signal that comprises information about at least one navigation key of the remote control; and
changing the image of the electronic image based on information about the at least one navigation key when the remote control signal including the information about the at least one navigation key is received.

13. The control method of claim 8, wherein the electronic manual comprises a plurality of pages, and
the control method further comprises:
receiving a remote control signal that comprises information about one or more number keys of the remote control; and
displaying an image of a page of the electronic manual corresponding to the one or more number keys when the remote control signal including the information about the one or more number keys is received.

14. The control method of claim 8, further comprising receiving a remote control signal comprising a shortcut key setting instruction to set a function for an undesignated shortcut key; and
allocating a function among a plurality of functions of the electronic equipment to the undesignated shortcut key based on the shortcut key setting instruction.
